# FASCICULE DE BREVET EUROPEEN

(11) **EP 0 514 234 B1**
(45) Date de publication et mention de la délivrance du brevet: **06.09.1995**
(21) Numéro de dépôt: 92401182.8
(22) Date de dépôt: 24.04.1992
(51) Int. Cl.: G05B 19/04

(54) **Sélecteur de commande électrique, pour pilotage d'au moins un actionneur mobile à positions discrètes**
Elektrischer Steuerungswähler zur Führung von mindestens einem beweglichen Stellglied in diskreten Stellungen
Electric control selector for steering at least one actuator movable to discrete positions

(30) Priorité: 26.04.1991 FR 9105163
(43) Date de publication de la demande: 19.11.1992
(73) Titulaire: VALEO ELECTRONIQUE, 94000 Creteil (FR)
(72) Inventeur: Peru, Patrick, F-77240 Vert Saint Denis (FR)
(74) Mandataire: Gamonal, Didier

(56) Documents cités:
- FR-A- 1 453 552
- GB-A- 27 563
- INSTRUMENTS AND CONTROL SYSTEMS, vol. 43, no. 1, Janvier 1970, Radnor,US;page 24 DELUCA PAUL V.:"High speed rotary switch"

## Description

La présente invention concerne un sélecteur de commande électrique pour pilotage d'au moins un actionneur d'un organe mobile à positions discrètes, notamment d'un projecteur de véhicule automobile, comportant un organe de commande propre à occuper plusieurs positions stables, un organe de commutation mobile sous l'action de l'organe de commande, un générateur émetteur de tension à valeurs discrètes comprenant deux entrées d'alimentation reliées respectivement à l'une des bornes d'une source d'alimentation électrique, une sortie de commande pour pilotage de l'actionneur et, entre lesdites entrées d'alimentation et ladite sortie de commande, au moins un réseau codé de résistances et pistes électriques, lesdites pistes électriques étant propres à coopérer, de manière codée, avec ledit organe de commutation pour émission d'un signal de consigne à la sortie de commande.

Un tel sélecteur est décrit dans le document EP-A-0 367 668. Dans celui-ci, l'actionneur comporte un générateur récepteur de tension à l'image du générateur émetteur du sélecteur, ainsi qu'un moteur électrique alimenté à partir d'amplificateurs différentiels, à gain limité ou fixe, montés en sens inverse. En outre, en cas d'avaries du fil de commande, l'organe mobile occupe une position déterminée.

Le sélecteur ou unité de commutation présente un organe de commutation sous forme d'un curseur conducteur, pour établir une liaison entre l'un des plots de contact (ou pistes électriques) et la sortie de commande ; le générateur émetteur consistant en un pont diviseur de tension avec des résistances.

Ceci amène à prendre des précautions particulières. En effet, il faut, lors d'un passage d'une position stable à une autre, que le curseur chevauche les pistes sinon cela engendrait au niveau de la sortie de commande à une information équivalente à une avarie du fil de commande, le projecteur se mettant alors automatiquement en position basse.

De plus, il faut éviter, lorsque deux pistes sont reliées aux entrées d'alimentation, que le curseur chevauche trois pistes en même temps lors du passage d'une position à une autre. En effet, compte tenu du montage mentionné ci-dessus de l'actionneur (ou unité de positionnement), le moteur électrique de celui-ci oscillerait. Il est souhaitable également pour des raisons de standardisation de ne pas modifier l'actionneur nettement plus coûteux, que le sélecteur.

La présente invention a pour objet de répondre de manière simple et économique à ces desiderata, sans avoir à modifier l'unité de positionnement.

Suivant l'invention, un sélecteur du type sus-indiqué est caractérisé en ce que la sortie de commande est reliée à chacune des entrées d'alimentation à travers au moins une résistance, en ce que ledit réseau codé de résistances et pistes électriques comporte au moins une piste collectrice reliée à la sortie de commande, une piste de réalimentation reliée à la sortie de commande, une piste d'alimentation reliée à l'une desdites entrées d'alimentation, et en ce que lesdites pistes électriques sont agencées et dimensionnées, en sorte que l'organe de commutation coopère en permanence avec la piste collectrice, pour un nombre inférieur de positions avec la piste d'alimentation et pour un nombre encore inférieur de positions avec la piste de réalimentation.

Grâce à l'invention, l'organe de commutation, par exemple un curseur, quitte une piste à chaque changement de positions, sans qu'il en découle une instabilité au niveau de l'actionneur du fait notamment que les pistes collectrice et de réalimentation sont reliées à la sortie de commande.

On appréciera que la disposition est économique et conduit à des modifications minimes. En outre, il est possible d'avoir un nombre élevé de positions stables, en faisant appel à une deuxième série de pistes de réalimentation plus longue que la première, et de longueur inférieure à la piste d'alimentation.

Il est également aisé de réaliser un nombre supérieur de positions en faisant appel, de manière symmétrique, à une deuxième piste d'alimentation reliée à l'autre entrée d'alimentation et à une deuxième piste de réalimentation reliée à la première. A chaque piste, on associe une résistance dépendant des applications. En variante, lesdites pistes pourraient avoir des résistivités différentes.

On appréciera que d'une position à une autre on met en jeu ou hors jeu une résistance, ce qui permet de conformer aisément le sélecteur pour association avec un actionneur standard.

La description qui va suivre illustre l'invention en référence aux dessins annexés dans lesquels :

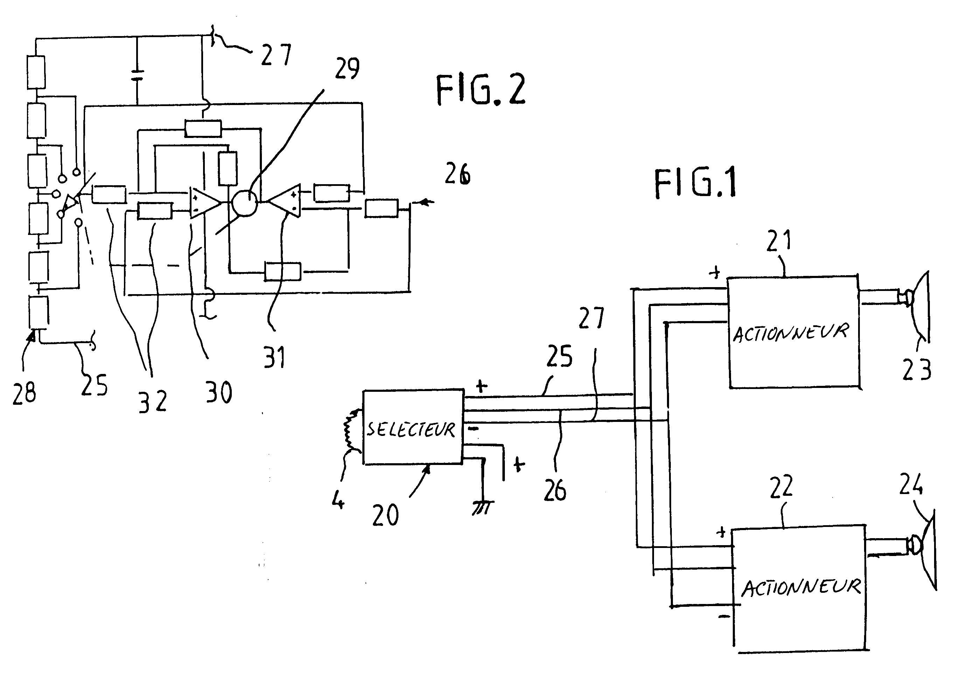

- la figure 1 est une vue schématique d'un sélecteur selon l'invention associé à deux actionneurs ;
- la figure 2 est une vue partielle du circuit électronique d'un actionneur ;
- la figure 3 est une vue en coupe axiale d'un sélecteur selon l'invention ;
- la figure 4 est une vue en coupe selon la ligne 4-4 de la figure 3 ;
- la figure 5 est une vue schématique du circuit électrique du sélecteur ;
- la figure 6 est une vue de dessous de la plaque de support du circuit électrique du sélecteur ;
- les figures 7 à 11 sont des vues schématiques montrant la valeur des résistances pour les diverses positions stables du sélecteur.

Dans les figures illustrées, le sélecteur de commande électrique 20 est destiné au pilotage d'au moins un actionneur 21,22 d'un organe mobile 23,24 à positions discrètes. Le sélecteur 20 comporte un organe de commande 4 propre à occuper plusieurs positions stables, un organe de commutation mobile 11 sous l'action de l'organe de commande 4, un générateur émetteur de tension à valeurs discrètes 50 comprenant deux entrées d'alimentation 58,59 reliées respectivement à l'une des bornes d'une source d'alimentation électrique, une sortie de commande 56 pour pilotage de l'actionneur et, entre lesdites entrées d'alimentation 58,59 et ladite sortie de commande 56, au moins un réseau codé de résistances R1 à R6 et de pistes électriques 51 à 55, lesdites pistes électriques étant propres à coopérer, de manière codée, avec ledit organe de commutation 11 pour émission d'un signal de consigne à sortie de commande 56.

Ici le sélecteur 20 est relié par trois lignes 25 à 27 à deux actionneurs 21,22, pour commande des projecteurs 23,24 d'un véhicule automobile, et est alimenté électriquement à partir de la batterie du véhicule automobile constituant la source d'alimentation électrique. Ces entrées 58,59 étant reliées respectivement à la borne négative de la batterie (la masse du véhicule) et à la borne positive de la batterie (+ 12V).

Ces actionneurs 21,22 ont une configuration du type de celle décrite dans le susmentionné document EP-A-0 367 668 et comportent un générateur récepteur de tension 28 à résistances, ainsi qu'un moteur électrique 29 et deux amplificateurs différentiels 30,31 montés tête-bêche, avec intervention de résistances 32.

La ligne 25 est reliée à la borne positive de la batterie du véhicule automobile, tandis que la ligne 27 est reliée à la masse du véhicule, la ligne 26 constituant la ligne de commande.

Bien entendu, chaque actionneur 21,22 peut être alimenté directement à partir de la batterie du véhicule, en sorte que la présence des lignes 25,27 n'est pas obligatoire.

Suivant l'invention, un sélecteur 20 du type sus-indiqué est caractérisé en ce que la sortie de commande 56 est reliée à chacune des entrées d'alimentation 58,59 à travers au moins une résistance R2,R1, en ce que ledit réseau codé de résistances R1 à R5 et pistes électriques 51 à 55 comporte au moins une piste collectrice 51 reliée à la sortie de commande 56, une piste de réalimentation 52,55 reliée à la sortie de commande 56, une piste d'alimentation 53,54 reliée à l'une desdites entrées d'alimentation 58,59, et en ce que lesdites pistes électriques 51 à 55 sont agencées et dimensionnées, en sorte que l'organe de commutation 11 coopère en permanence avec la piste collectrice 51, pour un nombre inférieur de positions avec la piste d'alimentation 53,54 et pour un nombre encore inférieur de positions avec la piste de réalimentation 52,55.

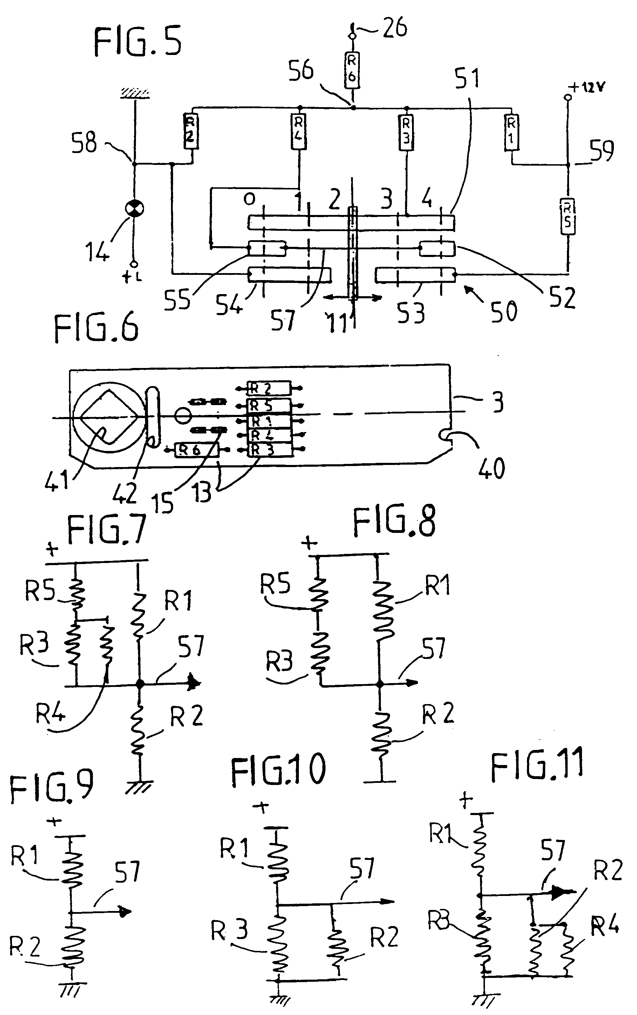

Dans les figures illustrées, le sélecteur est propre à occuper cinq positions stables (comme l'actionneur), repérées de 0 à 4 à la figure 5, et la disposition est symmétrique par rapport à la position médiane 2, les pistes d'alimentation, de réalimentation et collectrices s'étendant parallèlement entre elles.

Plus précisément, il est prévu deux pistes d'alimentation 53,54, deux pistes de réalimentation 52,55 reliées entre elles par une ligne conductrice 57, et une piste collectrice unique 51. Cette piste collectrice 51 est reliée par une résistance R3 à la sortie de commande 56, tandis que les pistes de réalimentation 52,55 sont reliées à la sortie 56 par une résistance R4. La piste 54 est reliée à l'entrée d'alimentation 58 (la masse) ainsi qu'à une résistance R2, et la piste d'alimentation 53 est reliée par une résistance R5 à l'entré 59 (+ 12V). La sortie de commande 56 est reliée à la masse et à l'entrée 58 par la résistance R2 et à l'entrée 59 par une résistance R5. Les pistes s'étendent parallèlement entre elles.

l'organe de commutation 11 consiste en un curseur mobile axialement, en forme de peigne à trois bras, propre à coopérer avec lesdites pistes électriques, de manière décrite ci-après. Ce curseur 11 électriquement conducteur, ici métallique, est solidaire d'un chariot 10 mobile axialement. Ce chariot 10, globalement en forme d'équerre, comporte une partie supérieure tubulaire avec un alésage interne fileté, pour coopération avec un filetage 12, que présente l'organe de commande 4 à sa périphérie externe.

L'organe 4 consiste en une mollette avec des crans et présente une partie tubulaire avec le filetage 12. Cette mollette 4 est montée mobile en rotation autour d'un axe 9 et est solidaire d'un insert 5 présentant des traits pour repérer les cinq positions stables de la mollette 4.

Là ou les pistes d'alimentation sont décalées axialement par rapport à la ou les pistes de réalimentation, elle-mêmes décalées axialement par rapport à la piste collectrice unique. Ici les pistes d'alimentation 53,54 sont dans le prolongement axial l'une de l'autre, tout comme les pistes de réalimentation 52,55, et s'étendent parallèlement à la piste 51 et auxdites pistes 52,55.

Les pistes 53,54 sont, suivant l'invention, plus longues axialement que les pistes 52,55 et sont plus courtes axialement que la piste 51. La longueur de la piste 51 est égale à la totalité de la longueur des pistes 53,54 séparées l'une de l'autre par une zone non conductrice, pour définition de la position médiane.

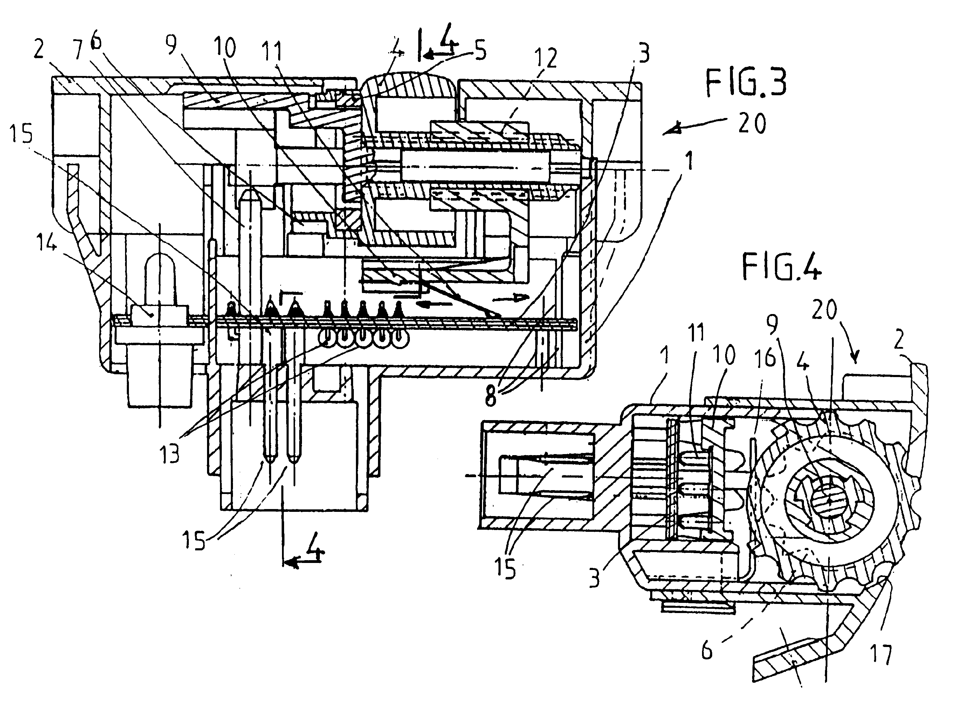

Le générateur 50 est porté par une plaque de support 3 en matériau électriquement isolant, ledit curseur 11 étant propre à coopérer avec ledit réseau. Tous ces constituants sont logés à l'intérieur d'un boîtier 1,2 ici en matière plastique électriquement isolante. Ce boîtier comporte un fond creux 1 avec une base conformée en connecteur, ledit fond étant coiffé par un couvercle 2 assemblé à celui-ci par encliquetage ou clipsage. Une patte de crochetage solidaire du couvercle 2, ainsi qu'une languette solidaire du fond 1 est visible dans la partie basse de la figure 4 ; l'assemblage se faisant de manière connue en soi par franchissement élastique de la languette et accrochage de la patte de crochetage avec une butée solidaire du fond 1, qui sert de guide au chariot 10.

En variante, l'assemblage des deux parties du boîtier peut se faire par vissage ou collage.

Le boîtier 1,2 comporte également des pattes, dont l'une est visible sur la partie gauche de la figure 3, pour montage sur la paroi du véhicule. Le couvercle 2 est stylisé et présente une ouverture 17 pour accès à la mollette 4 et son actionnement par l'usager.

Les positions stables de la mollette 4 sont obtenues grâce à des moyens de verrouillage débrayables consistant ici en des crans 6 formés dans la mollette 4 et en un organe élastique de verrouillage 16 porté par le fond 11, sous forme d'une lame propre à coopérer avec lesdits crans. Le passage d'une position stable à une autre se faisant par rotation de la mollette 4 et désengagement de la lame 16, puis enclenchement de celle-ci dans un autre cran 6. Bien entendu, en variante, on peut faire appel à un dispositif avec un plongeur propre à coopérer avec lesdits crans 6 en étant soumis à l'action d'un moyen élastique de rappel.

Ici l'axe 9 est porté par le couvercle 2 et présente une partie épaissie pour coopération par liaison de formes avec l'alésage interne de la mollette 4 et liaison en rotation avec celle-ci (figure 4).

La plaque support 3 porte sur l'une de ses faces des broches 15 traversant la base du fond 1 et appartenant à la partie connectrice de celui-ci. Sur cette même face il porte également des résistances 13 appartenant au réseau codé, les pistes électriques 51 à 55 conductrices étant disposées sur l'autre face de la plaque support 3 en matériau isolant. Cette plaque porte et alimente également une lampe d'éclairage 14 propre à éclairer l'insert 5 en matériau translucide, ladite lampe 14 étant accessible de l'extérieur.

Le fond 1 porte une tige 7 traversant un trou 42 pratiqué dans la plaque 3 (figure 6) pour immobilisation de celle-ci et support de l'axe 9. Ladite plaque 3 présente également une encoche 40 pour passage d'une saillie appartenant à un réseau de saillies 8 de support et de blocage pour la plaque 3. La lampe 14 est montée à la faveur d'une ouverture 41 de la plaque 3.

Le chariot 10 présente une partie inférieure horizontale s'étendant en-dessous de la mollette 4 et portant le curseur 11, ici à trois bras, pour coopérer avec lesdites pistes. Le dispositif fonctionne par recouvrement et découvrement de pistes.

Les résistances R1 à R5 ont des valeurs dépendant des applications et une résistance R6 est prévue à la sortie 56, ladite résistance R6 étant une résistance de sécurité. Ici les valeurs des résistances R1 à R6 sont différentes.

Ainsi par exemple, le passage de la position 2 médiane à la position 1 s'effectue par rotation de la mollette 4 et passage de celle-ci d'un cran concerné à l'autre, le mouvement de la mollette étant transformé en déplacement axial du chariot 10 par la liaison à filetage, ledit chariot déplaçant axialement le curseur Il en étant guidé axialement par les parois latérales du fond 1 (figure 4). Lors de cette phase, le curseur 11 qui initialement n'était en contact qu'avec la piste collectrice 51 est admis à rentrer en contact avec la piste 54 et à relier entre elles lesdites pistes, puis si l'on poursuit le mouvement (passage de la position 1 à la position 0) à entrer en contact avec la piste de réalimentation 55 et à relier entre elles les trois pistes 51,54,55.

On peut bien entendu effectuer un mouvement en sens inverse et passer de la position 2 à la position 3, avec chevauchement de la piste d'alimentation 53 puis de la position 3 à la position 4 avec chevauchement de la piste de réalimentation 52 connectée à la piste 55 par la ligne 57 et vice versa.

Dans les figures 7 à 11, on a représenté la valeur des résistances mises en jeu et déterminant les tensions à la sortie 56, pour les diverses positions du curseur 11. La figure 7 correspondant à la position 4 et les figures 8 à 11 aux positions 3 à 0.

Ainsi qu'on l'aura compris, suivant une caractéristique de l'invention, et tel qu'il résulte des figures 8 à 11 d'une position à l'autre, une résistance est admise à être mise en jeu ou hors jeu.

On appréciera que le circuit électrique de l'actionneur n'a pas à être modifié et que le générateur émetteur de tension du sélecteur et le générateur associé de l'actionneur peuvent être aisément à l'image l'un de l'autre par un choix approprié des résistances du sélecteur.

Les pistes 51 à 55 appartiennent à un circuit imprimé ou en variante à un circuit métallique découpé, ledit circuit comportant des lignes de connexion avec les résistances R1 à R5 et étant porté par la plaque 3.

On notera qu'évidemment toutes ces pistes sont conformées et dimensionnées pour coopérer avec le curseur 11, et ont notamment une largeur supérieure à celle des bras, l'écartement axial, entre les pistes collectrices de réalimentation et d'alimentation, étant fonction de l'écartement des bras du curseur 11.

Bien entendu la présente invention n'est pas limitée à l'exemple de réalisation décrit. En particulier, le nombre de positions peut être inférieur à 5 ou supérieur à ce nombre et dépend du nombre de positions de l'actionneur.

En effet, par exemple pour obtenir trois positions, il suffit de raccourcir la piste 51 et d'éliminer les pistes 52 et 53. Si l'on veut un nombre supérieur de positions, il suffit de rajouter une deuxième série (ou un nombre supérieur) de pistes de réalimentation étant entendu qu'à chaque fois la longueur de cette nouvelle piste est inférieure à celle de la piste d'alimentation concernée en étant supérieure à celle de la première piste de réalimentation.

Bien entendu, au lieu d'avoir un mouvement linéaire, on pourrait concevoir une disposition avec des pistes en forme de secteur circulaire disposées sur des circonférences de diamètre différent, le curseur 11 se déplaçant circulairement.

Dans tous les cas, la piste collectrice a une étendue axiale ou circonférentielle supérieure à celle de la piste d'alimentation elle-même d'étendue supérieure à piste de réalimentation, le curseur ne reliant jamais entre elles les deux pistes d'alimentation.

## Revendications

1. Sélecteur de commande électrique (20), pour pilotage d'au moins un actionneur (21,22) d'un organe mobile (23,24) à positions discrètes, notamment d'un projecteur de véhicule automobile, comportant un organe de commande (4) propre à occuper plusieurs positions stables, un organe de commutation (11) mobile sous l'action de l'organe de commande (4), un générateur émetteur de tension (50) à valeurs discrètes comprenant deux entrées d'alimentation (58,59) reliées respectivement à l'une des bornes d'une source d'alimentation électrique, une sortie de commande (56), pour pilotage de l'actionneur (21,22), entre lesdites entrées d'alimentation (58,59) et ladite sortie de commande (56), au moins un réseau codé (51 à 55 ; R1 à R5) de résistances et pistes électriques, lesdites pistes électriques (51 à 55) étant propres à coopérer, de manière codée, avec ledit organe de commutation (4) pour émission d'un signal de consigne à la sortie de commande (56), caractérisé en ce que la sortie de commande (56) est reliée à chacune des entrées d'alimentation (58,59) à travers au moins une résistance (R2,R1), en ce que ledit réseau codé de résistances (R1 à R5) et pistes électriques (51 à 55) comporte au moins une piste collectrice (51) reliée à la sortie de commande (56), une piste de réalimentation (52,55) reliée à la sortie de commande (56), une piste d'alimentation (53,54) reliée à l'une desdites entrées d'alimentation (58,59), et en ce que lesdites pistes électriques (51 à 55) sont agencées et dimensionnées, en sorte que l'organe de commutation (11) coopère en permanence avec la piste collectrice (51), pour un nombre inférieur de positions avec la piste d'alimentation (53,54) et pour un nombre encore inférieur de positions avec la piste de réalimentation (52,55).

2. Sélecteur selon la revendication 1, caractérisé en ce que la piste collectrice (51) a une étendue axiale ou circonférentielle supérieure à celle de la piste d'alimentation (53,54), elle-même d'étendue supérieure à la piste de réalimentation (52,55).

3. Sélecteur selon la revendication 1 ou 2, caractérisé en ce que les pistes collectrice (51) et de réalimentation (52,54) sont reliées à la sortie de commande chacune par une résistance spécifique (R3,R4).

4. Sélecteur selon l'une quelconque des revendications 1 à 3, caractérisé en ce qu'il présente deux pistes d'alimentation (53,54) reliées chacune à l'une des entrées d'alimentation (59,58), en étant séparées l'une de l'autre par une zone non conductrice.

5. Sélecteur selon la revendication 4, caractérisé en ce que l'une des pistes d'alimentation (53) est reliée à l'entrée d'alimentation (59), elle-même connectée à la borne positive d'une source de tension, par une résistance (R5), tandis que l'autre piste d'alimentation (54) est reliée à l'autre entrée d'alimentation (58), elle-même connectée à la borne négative d'une source de tension, ainsi qu'à une résistance (R2) reliée à la sortie de commande (56).

6. Sélecteur selon la revendication 5, caractérisé en ce que ladite résistance (R5) reliant ladite piste d'alimentation (53) à ladite entrée d'alimentation concernée (59) est reliée à une résistance (R1) reliant ladite entrée d'alimentation (59) à la sortie de commande (56).

7. Sélecteur selon l'une quelconque des revendications 1 à 6, dans lequel l'organe de commutation (11) consiste en un curseur à bras monté mobile axialement, caractérisé en ce que la piste collectrice (51) s'étend parallèlement à la ou les pistes de réalimentation (52,55) et parallèlement à la ou les pistes d'alimentation (53,54).

8. Sélecteur selon la revendication 7, caractérisé en ce que le curseur (11) est porté par un chariot (10), lui-même entraîné par une liaison à filetage par l'organe de commande (4), sous forme d'une mollette.

9. Sélecteur selon l'une quelconque des revendications précédentes, caractérisé en ce que lespistes d'alimentation (53,54), de réalimentation (52,55) et la piste collectrice (51) sont portées par une plaque de support (3).

## Patentansprüche

1. Elektrischer Steuerungswähler (20) zur Führung von mindestens einem Stellglied (21, 22) eines beweglichen Organs (23, 24) in diskreten Stellungen, vor allem zu einem Kraftfahrzeugscheinwerfer, bestehend aus einem Steuerungsorgan (4), das mehrere stabile Stellungen einnehmen kann, einem unter der Einwirkung des Steuerungsorgans (4) beweglichen Schaltorgan (11), einem Generator für die Abgabe einer Spannung (50) mit diskreten Werten, enthaltend zwei Speiseeingänge (58, 59), die jeweils an eine der Klemmen einer Stromversorgungsquelle angeschlossen sind, einen Steuerungsausgang (56) zur Führung des Stellglieds (21, 22) und zwischen den besagten Speiseeingängen (58, 59) und dem besagten Steuerungsausgang (56) mindestens eine codierte Gruppe (51 bis 55; R1 bis R5) von Widerständen und Strombahnen, wobei die besagten Strombahnen (51 bis 55) in codierter Form mit dem besagten Schaltorgan (4) zusammenwirken können, um am Steuerungsausgang (56) ein Sollwertsignal auszugeben, **dadurch gekennzeichnet**, daß der Steuerungsausgang (56) mit jedem der Speiseeingänge (58, 59) über mindestens einen Widerstand (R2, R1) verbunden ist, daß die besagte codierte Gruppe von Widerständen (R1 bis R5) und Strombahnen (51 bis 55) mindestens eine mit dem Steuerungsausgang (56) verbundene Sammelstrombahn (51), eine mit dem Steuerungsausgang (56) verbundene Nachspeisestrombahn (52, 55) und eine mit einem der besagten Speiseeingänge (58, 59) verbundene Speisestrombahn (53, 54) umfaßt und daß die besagten Strombahnen (51 bis 55) so gestaltet und ausgelegt sind, daß das Schaltorgan (11) ständig mit der Sammelstrombahn (51), bei einer geringeren Anzahl von Stellungen mit der Speisestrombahn (53, 54) und bei einer noch geringeren Anzahl von Stellungen mit der Nachspeisestrombahn (52, 55) zusammenwirkt.

2. Steuerungswähler nach Anspruch 1, **dadurch gekennzeichnet**, daß die Sammelstrombahn (51) eine größere axiale oder umfangsmäßige Ausdehnung als die Speisestrombahn (53, 54) hat, die wiederum eine größere Ausdehnung als die Nachspeisestrombahn (52, 55) besitzt.

3. Steuerungswähler nach Anspruch 1 oder 2, **dadurch gekennzeichnet**, daß die Sammelstrombahn (51) und die Nachspeisestrombahn (52, 54) jeweils über einen spezifischen Widerstand (R3, R4) mit dem Steuerungsausgang verbunden sind.

4. Steuerungswähler nach einem der Ansprüche 1 bis 3, **dadurch gekennzeichnet**, daß er zwei Speisestrombahnen (53, 54) aufweist, die jeweils mit einem der Speiseeingänge (59, 58) verbunden sind, wobei sie durch einen nichtleitenden Bereich voneinander getrennt werden.

5. Steuerungswähler nach Anspruch 4, **dadurch gekennzeichnet,** daß eine der Speisestrombahnen (53) mit dem Speiseeingang (59) verbunden ist, der wiederum über einen Widerstand (R5) an die Plusklemme einer Spannungsquelle angeschlossen ist, während die andere Speisestrombahn (54) mit dem anderen Speiseeingang (58) verbunden ist, der Wiederum an die Minusklemme einer Spannungsquelle sowie an einen mit dem Steuerungsausgang (56) verbundenen Widerstand (R2) angeschlossen ist.

6. Steuerungswähler nach Anspruch 5, **dadurch gekennzeichnet**, daß der besagte Widerstand (R5), der die besagte Speisestrombahn (53) mit dem betreffenden Speiseeingang (59) verbindet, an einen Widerstand (R1) angeschlossen ist, der den besagten Speiseeingang (59) mit dem Steuerungsausgang (56) verbindet.

7. Steuerungswähler nach einem der Ansprüche 1 bis 6, bei dem das Schaltorgan (11) aus einem Gleitkontakt mit Armen besteht, der axial beweglich eingebaut ist, **dadurch gekennzeichnet**, daß sich die Sammelstrombahn (51) parallel zu der bzw. den Nachspeisestrombahnen (52, 55) und parallel zu der bzw. den Speisestrombahnen (53, 54) erstreckt.

8. Steuerungswähler nach Anspruch 7, **dadurch gekennzeichnet**, daß der Gleitkontakt (11) auf einem Schlitten (10) angebracht ist, der wiederum über eine Gewindeverbindung durch das Steuerungsorgan (4) in Form eines Rädchens bewegt wird.

9. Steuerungswähler nach einem der vorangehenden Ansprüche, **dadurch gekennzeichnet**, daß die Speisestrombahn (53, 54), die Nachspeisestrombahn (52, 55) und die Sammelstrombahn (51) auf einer Trägerplatte (3) angebracht sind.

## Claims

1. An electrical control selector (20), for operating at least one actuator (21, 22) of a member (23, 24) movable between a plurality of discrete positions, in particular a motor vehicle headlamp, the selector comprising a control member (4) adapted to occupy a plurality of stable positions, a switching member (11) which is movable under the action of the control member (4), a voltage generator (50) for emitting voltages at discrete values and having two supply inputs (58, 59), each connected to a respective one of the terminals of an electrical supply source, a control output terminal (56) for controlling the actuator (21, 22), and, between the said supply inputs (58, 59) and the said output terminal (56), at least one coded network (51 to 55; R1 to R5) of electrical resistors and contact strips, with the said electrical contact strips (51 to 55) being adapted to cooperate in a coded manner with the said switching member (4) for emission of a command signal to the output terminal (56), characterised in that the control output terminal (56) is connected to each of the supply inputs (58, 59) through at least one resistor (R2, R1), in that the said coded network of resistors (R1 to R5) and electrical contact strips (51 to 55) comprises at least one collecting strip (51) connected to the output terminal (56), a secondary supply contact strip (52, 55) connected to the output terminal (56), and a primary supply contact strip (53, 54) connected to one of the said supply inputs (58, 59), and in that the said electrical contact strips (51 to 55) are so arranged and dimensioned that the switching member (11) is in cooperation with the collecting strip (51) permanently, with the primary supply contact strip (53, 54) in a smaller number of positions, and with the secondary supply contact strip (52, 55) in an even smaller number of positions.

2. A selector according to Claim 1, characterised in that the collecting strip (51) extends axially or circumferentially over a distance greater than that of the primary supply contact strip (53, 54), which itself extends over a length greater than the secondary supply contact strip (52, 55).

3. A selector according to Claim 1 or Claim 2, characterised in that the collecting strip (51) and the secondary supply contact strips (52, 54) are each connected to the control output terminal through a respective resistor (R3, R4).

4. A selector according to any one of Claims 1 to 3, characterised in that it has two primary supply contact strips (53, 54), each of which is connected to one of the supply inputs (59, 58), being separated from each other by a non-conducting zone.

5. A selector according to Claim 4, characterised in that one of the primary supply contact strips (53) is connected, through a resistor (R5), to the supply input (59) which is itself connected to the positive terminal of a voltage source, while the other primary supply contact strip (54) is connected to the other supply input (58), which is itself connected to the negative terminal of a voltage source and to a resistor (R2) connected to the control output terminal (56).

6. A selector according to Claim 5, characterised in that the said resistor (R5) connecting the said primary supply contact strip (53) to the corresponding said supply input (59) is connected to a resistor (R1) which connects the said supply input (59) to the control output terminal (56).

7. A selector according to any one of Claims 1 to 6, wherein the switching member (11) consists of a pronged cursor mounted for axial movement, characterised in that the collecting strip (51) extends parallel to the secondary supply contact strip or strips (52, 55) and parallel to the primary supply contact strip or strips (53, 54).

8. A selector according to Claim 7, characterised in that the cursor (11) is carried by a carriage (10) which is itself driven, through a threaded coupling, by the control member (4) which is in the form of a wheel.

9. A selector according to any one of the preceding Claims, characterised in that the contact strips (53, 54) for the primary supply, and those (52, 55) for the secondary supply, and the collecting strip (51), are carried by a support plate (3).
